# EUROPEAN PATENT SPECIFICATION

(11) **EP 3 227 722 B1**
(45) Date of publication and mention of the grant of the patent: **14.10.2020**
(21) Application number: 15807985.5
(22) Date of filing: 02.12.2015
(51) Int. Cl.: G01S 19/14, G01S 19/39, G01S 5/00

(54) **APPARATUS FOR MONITORING AIRCRAFT POSITION**
VORRICHTUNG ZUR FLUGZEUGPOSITIONSÜBERWACHUNG
APPAREIL DE SURVEILLANCE DE POSITION D'AVION

(30) Priority: 02.12.2014 GB 201421394; 02.12.2014 US 201414558063
(43) Date of publication of application: 11.10.2017
(73) Proprietor: SITA Information Networking Computing UK Limited, Hayes, Middlesex UB3 1BW (GB)
(72) Inventor: GIBSON, Paul, Hayes Middlesex UB3 1BW (GB); LACROIX, Yanik, Montreal, Québec H3A1G1 (CA); VACHON, Benoit Jean Joseph, Montreal, Québec H3A 1G1 (CA)
(74) Representative: West, Jonathan David
(86) International application number: PCT/GB2015/053679
(87) International publication number: WO 2016/087848

(56) References cited:
- US-A1- 2005 068 232
- US-A1- 2006 085 236
- US-A1- 2013 297 103

## Description

### Field of the Invention

The present invention relates to an apparatus and method for monitoring the positions of one or more aircraft. In particular, the present invention relates to an apparatus and method for monitoring the position of a given aircraft accurately and autonomously.

### Background to the Invention

Current aircraft monitoring systems typically use aircraft communications addressing and reporting system (ACARS) data in combination with radar data in order to track the progress of aircraft. This data may be used by air traffic controllers or alternatively provided as a service to aircraft operators.

In the ACARS system, each aircraft is fitted with a VHF transceiver for providing a data link between the aircraft on-board equipment and ground equipment. This data link may be provided through a direct transmission from the aircraft to a ground station, or alternatively the aircraft may transmit the data to a satellite, which then forwards the data to a satellite ground station. These transmissions are received at the ground stations by a data link service provider that then routes the data to the air traffic controllers or aircraft operators.

The periodicity within which a given aircraft will emit ACARS data transmissions is configured by the operating airline and is typically in the order of ten to twenty minutes. This is generally determined in order to provide a balance between receiving up to date data and the per message costs associated with the data transfer. In view of this relatively long period between consecutive message transmissions, the time stamp for any given ACARS transmission is only accurate to within a minute and the position data is reported within accuracy of three decimal places. This means that significant distances can be covered by an aircraft between consecutive ACARS transmissions, which can in turn lead to an uncertainty in the estimated position and path of an aircraft.

Furthermore, if the aircraft is forced to circle in a given area of airspace, for example, in an airport holding pattern, this will not be immediately apparent from the ACARS data as the aircraft will likely have performed a full circle by the time a subsequent ACARS transmission is carried out. This can lead those monitoring the ACARS data to be unsure as to whether these data transmissions are erroneous or if the aircraft truly has remained in a given area of airspace between subsequent ACARS transmissions.

Increasing the frequency (i.e. reducing the period between consecutive transmissions) of ACARS messaging would provide a more up to date set of position data; however, since this ACARS system is a one-to-one digital data link system, this would place a large burden on the ACARS network. This would overload the network, which would then reduce the reliability and accuracy of the network. Accordingly another solution to this problem must be found.

One alternative data source for aircraft position information is to use primary and/or secondary radar installations. Primary radar is an independent method of monitoring the location of a given target aircraft and simply uses the well known principle of emitting a high power radio transmission and then detecting the reflected transmissions from any object that is in the radar's field of view.
In secondary radar, the target aircraft must be fitted with a transponder such that the aircraft can identify itself, in response to an interrogation signal emitted by the radar installation, using a code that has been issued to that aircraft by an air traffic controller. Radar systems have the advantage that aircraft position can be tracked with a greater frequency in order to more accurately monitor a given aircraft's flight path; however, each radar installation requires a very high amount of power in order to transmit the radar pulse over the operational range of the radar system. Furthermore, radar systems are very expensive to install and maintain, especially over large areas.

It has been appreciated by the present applicants that a more accurate system for monitoring aircraft positions that can be implemented using comparatively low cost apparatus is required. US2005/068232 relates to a system for determining the position of aircraft not equipped with ADS-B using ground based surveillance so that this can be broadcast to other aircraft using an ADS-B data link.

### Summary of the Invention

According to a first aspect of the invention, there is provided an apparatus for monitoring the positions of one or more aircraft. The apparatus comprises a first receiver device configured to receive first aircraft position information, over a digital data link, from a first radio frequency source located onboard the aircraft at a first periodicity, via one or more ground stations and a second receiver device configured to receive second aircraft position information broadcasted from a second radio frequency source located onboard the aircraft at a second periodicity, via one or more ground stations.

The apparatus additionally comprises a buffer configured to receive the first and second aircraft position information from the first and second receiver devices respectively. The apparatus further comprises a processor configured to receive and to filter the buffered first and second aircraft position information. The processor is further configured to smooth the filtered aircraft position information and to output the smoothed aircraft position information such that it can be overlaid onto electronic geographical mapping data. The processor is configured to filter the first and second aircraft position information such that the quantity of position information data smoothed for a given aircraft is within a given limit for a given time period.

The apparatus advantageously enables multiple sources of information regarding a given aircraft's position that are of varying accuracy, frequency and quality to be combined and consolidated into a consistent output that delivers highly accurate and dynamic aggregate aircraft position information with the ability to track flight deviations in substantially real-time. Furthermore, the aircraft's position with respect to weather patterns or other specific regions or airspace can be tracked with a greater degree of certainty in order to support the relevant aircraft operator decision making processes by providing increased real-time aircraft location visibility. The receiver devices may be hardware-implemented or alternatively may be implemented in software.

The processor is configured to filter the aircraft position information based on the relative positional accuracy and the relative temporal accuracy of the respective sources that the aircraft position information is received from. In this manner, the processor advantageously enables the apparatus to only smooth the most accurate information that is received from the respective sources within a given period of time.

The smoothing of aircraft position information may optionally comprise removing erroneous data points or data points of a lower quality or may comprise averaging specific pairs or groups data points. This enables any conflicts or errors in the multiple data sets to be resolved such that a consistent progression of the aircraft's position can be output.

In some embodiments of the invention, the second periodicity is shorter than the first periodicity, i.e. the second aircraft position information may be broadcast with a higher frequency of transmission than the first aircraft position information. In one example, the first aircraft position information is received, at the first receiver, from an Aircraft Communications Addressing and Reporting System transceiver. In a further example, the second aircraft position information is received, at the second receiver, from an Automatic Dependent Surveillance-Broadcast transmitter.

The first and second aircraft position information may be received via one or more of a VHF ground station, a HF ground station or a satellite ground station. These ground stations allow for the transmissions from the aircraft to be received directly at ground level or alternatively via one or more satellites.

Advantageously, the apparatus may further comprise a fourth receiver configured to receive radar aircraft position data, wherein the processor is configured to filter the radar aircraft position data in combination with the first and second aircraft position information such that the quantity of position information data smoothed is within a given limit for a given time period.

In some embodiments of the invention, the apparatus further comprises a fifth receiver configured to receive weather data, wherein the processor is further configured to output the weather data such that it can be overlaid onto the electronic geographical mapping data. This advantageously enables users to accurately track the aircraft's position with respect to weather patterns in order to support the relevant aircraft operator in its decision making processes. For example, the aircraft operator may be able to determine that a given aircraft will need to be diverted from its planned route, thus allowing the aircraft operator to consider any knock on effects that this diversion may have ahead of time.

In another advantageous embodiment of the invention, the apparatus may further comprise a sixth receiver configured to receive flight plan data corresponding to the aircraft, wherein the processor is configured to output the flight plan data such that it can be overlaid onto the electronic geographical mapping data and smoothed aircraft position information. This improves the visibility of any deviations that the aircraft may make from its planned route, thus allowing these deviations to be quickly identified and any resulting change in the expected time of arrival of the aircraft at its destination to be determined.
Advantageously, the buffer may be a circular buffer and the processor filter may comprise a sampling filter for filtering and sorting the aircraft position information to be included in a reduced set of aircraft position information. This allows the evolving and incomplete aircraft position information received from the plurality of receivers to be interpreted and harmonised before it is aggregated. The sampling filter is optionally based on temporal and precision criteria.

In a further embodiment of the invention, the processor may be configured to identify aircraft position data relating to a given aircraft by a data matching engine.

Advantageously, the apparatus may further comprise storing the smoothed aircraft position information in a data store, for subsequent analysis. This analysis can enable aircraft operators to determine any inefficiencies that have occurred in their past operations such that they can be taken into consideration and used to optimise future operations.

In a further embodiment, the processor may be configured to output extrapolated aircraft position information such that it can be overlaid onto the electronic geographical mapping data in the event that no aircraft position information is received at the processor for a given aircraft within a given time period. This allows, for example, the estimated impact of current or predicted weather patterns or other specific regions or airspace to be tracked accurately, even when aircraft position information has not been received for a short while, in order to support the relevant aircraft operator decision making processes.

In yet another embodiment, the processor may be configured to output ACARS aircraft position information such that it can be overlaid onto the electronic geographical mapping data alongside the smoothed aircraft position information in the event that the ACARS aircraft position information does not form part of the smoothed aircraft position information. In this manner, the ACARS position information may be displayed on the mapping data even if it has been filtered out by the processor due to the availability of more accurate aircraft position information.

According to a second aspect of the invention, there is provided a computerised method for monitoring the positions of one or more aircraft. The computerised method comprises receiving, at a first receiver device, first aircraft position information, over a digital data link, from a first radio frequency source located onboard the aircraft at a first periodicity, via one or more ground stations; receiving, at a second receiver device, second aircraft position information broadcasted from a second radio frequency source located onboard the aircraft at a second periodicity, via one or more ground stations.

The computerised method further comprises receiving, at a buffer, the received first and second aircraft position information; processing, at a processor, the buffered first and second aircraft position information to filter the first and second aircraft position information, processing, at the processor, the filtered aircraft position information to produce smoothed aircraft position information; and outputting, from the processor, the smoothed aircraft position information such that it can be overlaid onto the electronic geographical mapping data. In the computerised method, the processor filters the first and second aircraft position information such that the quantity of position information data smoothed for a given aircraft is within a given limit for a given time period. This advantageously allows users, such as aircraft operators, access to an accurate consolidation of multiple sources of position information regarding a given aircraft and for this information to be presented visually in a user friendly format over electronic mapping data.

The filtering of the aircraft position information is based on the relative positional accuracy and the relative temporal accuracy of the respective sources that the aircraft position information is received from. In this manner, the processor advantageously enables the apparatus to only smooth the most accurate information that is received from the respective sources within a given period of time.

The smoothing of aircraft position information may optionally comprise removing erroneous data points or data points of a lower quality or may comprise averaging specific pairs or groups data points. This enables any conflicts or errors in the multiple data sets to be resolved such that a consistent progression of the aircraft's position can be output.

In some embodiments of the invention, the second periodicity is shorter than the first periodicity, i.e. the second aircraft position information may be broadcast with a higher frequency of transmission than the first aircraft position information. In one example, the first aircraft position information is received, at the first receiver, from an Aircraft Communications Addressing and Reporting System (ACARS) transceiver and the first aircraft position information is ACARS aircraft position information. In a further example the second aircraft position information is received, at the second receiver, from an Automatic Dependent Surveillance-Broadcast transmitter.

The first and second aircraft position information may be received via one or more of a VHF ground station, a HF ground station or a satellite ground station. These ground stations allow for the transmissions from the aircraft to be received directly at ground level or alternatively via one or more satellites.

Advantageously, the computerised method may further comprise receiving, at a fourth receiver, radar aircraft position data and filtering the radar aircraft position data in combination with the first and second aircraft position information such that the quantity of position information data smoothed at the processor is within a given limit for a given time period.

In some embodiments of the invention, the computerised method further comprises receiving, at a fifth receiver, weather data and then outputting, from the processor, the weather data such that it can be overlaid onto the electronic geographical mapping data. This advantageously enables users to accurately track the aircraft's position with respect to weather patterns in order to support the relevant aircraft operator in its decision making processes. For example, the aircraft operator may be able to determine that a given aircraft will need to be diverted from its planned route, thus allowing the aircraft operator to consider any knock on effects that this diversion may have ahead of time.

In another advantageous embodiment of the invention, the computerised method may comprise receiving, at a sixth receiver, flight plan data corresponding to the aircraft and outputting, from the processor, the flight plan data such that it can be overlaid onto the electronic geographical mapping data and smoothed aircraft position information. This improves the visibility of any deviations that the aircraft may make from its planned route, thus allowing these deviations to be quickly identified and any resulting change in the expected time of arrival of the aircraft at its destination to be determined.

Advantageously, the buffer may be a circular buffer and the processor filter may comprise a sampling filter to filter and sort the aircraft position information to be included in a reduced set of aircraft position information. This allows the evolving and incomplete aircraft position information received from the plurality of receivers to be interpreted and harmonised before it is aggregated. The sampling filter is optionally based on temporal and precision criteria.

In a further embodiment of the invention, the method may further comprise identifying, at the processor, aircraft position data relating to a given aircraft by a data matching engine.

Advantageously, the computerised method may comprise storing the smoothed aircraft position information in a data store, for subsequent analysis. This analysis can enable aircraft operators to determine any inefficiencies that have occurred in their past operations such that they can be taken into consideration and used to optimise future operations.

In a further embodiment, the computerised method may comprise the step of outputting extrapolated aircraft position information such that it can be overlaid onto the electronic geographical mapping data in the event that no aircraft position information is received at the processor for a given aircraft within a given time period. This allows, for example, the estimated impact of current or predicted weather patterns or other specific regions or airspace to be tracked accurately, even when aircraft position information has not been received for a short while, in order to support the relevant aircraft operator decision making processes.

In yet another embodiment, the computerised method may include outputting ACARS aircraft position information such that it can be overlaid onto the electronic geographical mapping data alongside the smoothed aircraft position information in the event that the ACARS aircraft position information does not form part of the smoothed aircraft position information. In this manner, the ACARS position information may be displayed on the mapping data even if it has been filtered out by the processors due to the availability of more accurate aircraft position information.

### Brief Description of the Drawings

Embodiments of the invention will now be described, by way of example only, and with reference to the accompanying drawings, in which:
Figure 1 is a schematic representation of an apparatus according to an embodiment of the invention interacting with the data sources;
Figure 2 is a schematic representation of an apparatus according to an embodiment of the invention;
Figure 3 is a screen shot of the geographical mapping data overlaid with a flight plan and a plot of the smoothed aircraft position information for a given aircraft;
Figure 4 is a flow diagram showing the main steps performed by an embodiment of the invention;
Figures 5a and 5b form a flow diagram showing the steps performed by another embodiment of the invention;
Figure 6 is a screen shot of the geographical mapping data overlaid with weather data in addition to a flight plan and a plot of the smoothed aircraft position information for a given aircraft;
Figures 7a to 7c are a series of screenshots showing a progression in time of forecast weather data combined with an estimated flight position overlaid on geographical mapping data; and
Figures 8a to 8c are a series of screenshots showing a progression in time of observed weather data combined with the observed flight position overlaid on geographical mapping data.

### Description of the Invention

Increasing numbers of aircraft are now being equipped with Automatic Dependent Surveillance-Broadcast (ADS-B) equipment, whereby each aircraft uses its global positioning system (GPS) to determine its position and then this position information is broadcast, along with further information such as the aircraft ID or transponder code, callsign, altitude, heading and velocity, using a radio frequency transceiver at a relatively regular period, for example, approximately once every second.

In line with this increased frequency, the ADS-B data broadcast by the aircraft is also more accurate. In ADS-B, the position data is reported within an accuracy of five decimal places and the corresponding time stamp is accurate to within one second. This increased accuracy allows ADS-B data to be of a higher quality than even radar location data. Furthermore, ADS-B systems can be implemented over larger areas at a fraction of the cost and maintenance required for radar installations.

The ADS-B system was originally designed in order to provide an additional input for the aircraft Traffic Collision Avoidance Systems (TCAS) of neighbouring aircraft, in this manner each aircraft could broadcast its identity, location and heading to the other aircraft in range of the transmissions. However, it has been appreciated that this ADS-B data could be utilised by ground systems for improved aircraft monitoring, provided that a receiver can be positioned within range of the aircraft.

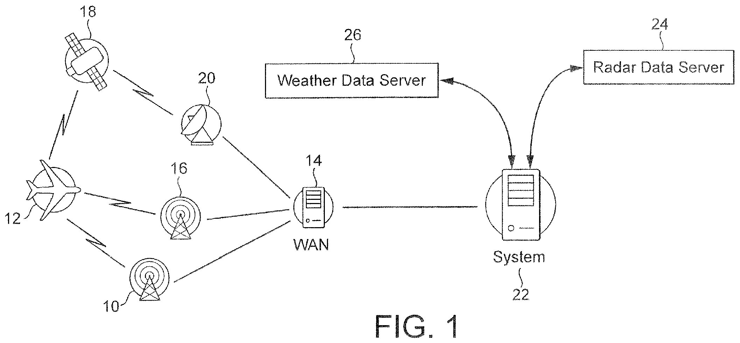

According to a first aspect of the invention, and with reference to Figure 1, ADS-B data can be used to monitor aircraft 12 over large regions of airspace by providing a network of receivers 10. Furthermore, the airspace coverage of such an apparatus can be extended simply by providing additional receivers, or ground stations 10, and connecting these ground stations to the existing ground stations using a communications network.

The communications network may be any public, private, wired or wireless network. The communications network may include one or more of a local area network (LAN), a wide area network (WAN) 14, the Internet, a mobile telephony communication system, or a satellite communication system. The communications network may comprise any suitable infrastructure, including copper cables, optical cables or fibres, routers, firewalls, switches, gateway computers and edge servers.

These ground stations 10 may comprise VHF ground stations or HF ground stations that operate on the VHF or HF radio frequency ranges respectively. The term "ground station" is used herein to refer to any receiver station at ground level. For the avoidance of doubt, these ground stations may include receivers located on ocean platforms, such as oil rigs, or floating vessels, such as tankers or aircraft carriers. Furthermore, separate ground stations may be used to receive the ACARS messages and ADS-B data, or alternatively the respective receivers may be combined into a single ground station. The data from each ground station may then be collected by the network 14 and combined to form a consolidated database of ADS-B data that may be used for monitoring aircraft 12 within the range of the network of ground stations 10. The airspace coverage of each ground station is in the form of a line of sight cone with an operational range of around 200 nautical miles.

The location of the ground stations 10 are typically not relevant as all of the necessary position data is transmitted by the ADS-B fitted aircraft 12; however, in some apparatus', these transmissions may be used as part of a multilateration system in order to triangulate the position of an aircraft 12. This could be advantageous, for example, if it is suspected that there is an error in the positional data emitted by the aircraft 12.

In the present apparatus, the aircraft 12 broadcasts ADS-B data substantially continuously, i.e. with a short period such as 1 second, such that a stream of substantially real-time aircraft position information can be received by ADS-B data receiver boxes, known as ground stations 10. The aircraft 12 also transmits ACARS messages, some of which may contain aircraft position information, which are received by ACARS ground stations 16 in the usual manner and forwarded through a digital data link system. These ACARS messages are transmitted with a comparatively long period, such as in the order of 10 minutes. The signal for the ACARS messages may be direct from the aircraft to the ground station 16, or alternatively the message may be routed via a satellite link 18 (in which case the ground station would be a satellite ground station 20).

The ADS-B data and ACARS messages containing position information are then collected centrally by the apparatus 22. The apparatus 22 may additionally receive radar aircraft position information from a radar data server 24 and/or weather data from a weather data server 26 as will be set out below.

Since the ADS-B data and ACARS messages come from multiple sources of varying frequency and quality, it is likely that there will be irregularities and conflicts in the position data, which if simply plotted without further processing could result in a zig-zag path when the aircraft 12 is in fact travelling in a straight line, or alternatively could lead to the position of the aircraft 12 being reported to have jumped hundreds of miles off course when the aircraft 12 is in fact still travelling the expected flight plan.

These conflicts would cause integrity issues in relation to the exactness and precision of the aggregated position and trajectory of a given aircraft. Furthermore, there would be severe performance issues in the display latency if an application attempted to plot all of the data points. This performance issue is exacerbated in the situation where internet browsers are used to access the data as browsers are not natively designed to display such large data sets in real-time.

The apparatus 22 may receive aircraft position information at a rate of once per second per flight for 10,000 flights simultaneously. This volume of data is simply too large for an internet browser to handle in real-time without crashing. Accordingly, it is desirable to regulate the volume of data to produce a reduced data set, whilst maintaining the highest degree of accuracy possible. This allows a large volume of data to be received without overloading the apparatus 22 or any system for displaying the data output from the apparatus 22.

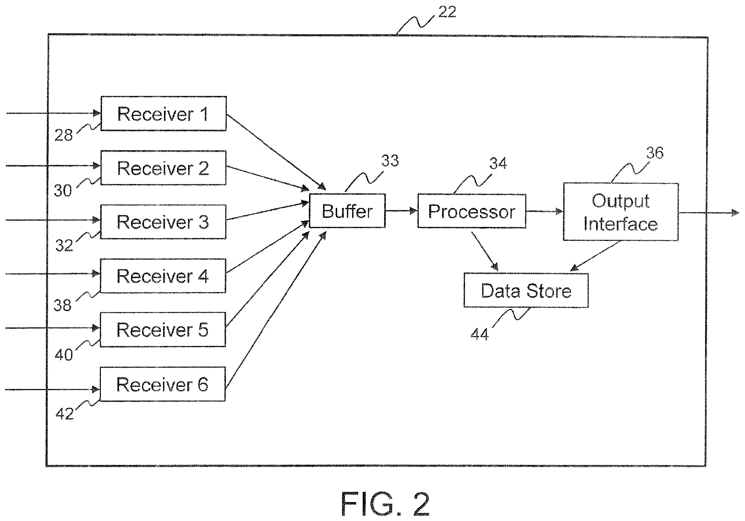

In order to address this problem, with reference to Figure 2, the apparatus 22 may receive ACARS messages containing aircraft position information from the aircraft 12 at a first receiver 28 and receive ADS-B aircraft position information from the aircraft 12 at a second receiver 30. Furthermore, mapping data may be received at a third receiver 32 for constructing an electronic geographical map including the geographical area that a given aircraft 12 is operating in.

The combined position information received at the first 28 and second 30 inputs can then be received at a buffer 33 before being processed. In order to remedy the data integrity issues that arise from the asynchronous nature of the arriving data, in a first step of the processing, a data matching engine comprising sophisticated algorithms is implemented to uniquely identify a given aircraft by combining partial data from multiple data sets. For example, one data set may refer to the aircraft by its tail number, whereas another data set may refer to the same aircraft by its current flight number. If this data is not matched and consolidated then the apparatus would attempt to plot two different aircraft when they actually represent the same aircraft.

The data matching engine is based on a large decision tree that takes a variety of position information that come in asynchronously as the input and then compares, orders and prioritises the position information so as to resolve the contradictions and false positives.

For example, ADS-B data and radar data typically identify an aircraft by the International Civil Aviation Organisation (ICAO) call sign, whereas ACARS data typically uses the International Air Transport Association (IATA) flight identifier. Accordingly, in some embodiments a dynamic table is created in order to maintain the relationship between ICAO call signs and IATA flight identifiers. This relationship may be determined based on items of data that indicate both the call sign and the flight identifier for a given flight, or alternatively it may be determined by identifying an intermediate item of data, such as the aircraft registration, which may be separately linked to a call sign and a flight identifier.

The data received may also be delayed due to network coverage issues, which can lead to a number of aircraft position information messages being received in bulk at the same time. The aircraft position information messages include timestamp data and so these messages are preferably arranged into their proper time wise order before the data is output by the output interface 36 of the system 22.

However, a given aircraft may have landed and subsequently taken off again before the aircraft enters network coverage, in which case the aircraft would have received a new identification to represent the new flight. Accordingly, the bulk of messages may include messages that relate to the previous flight. If the processor 34 determines that the aircraft position information does not relate to the current flight identification, or it is otherwise not possible to arrange the messages in the correct order, then this aircraft position information is preferably discarded.

A further example is the situation wherein an aircraft flies into an ADS-B data coverage zone such that the system 22 starts to receive ADS-B partway through the aircraft's flight. In this situation, the system 22 will already have been receiving aircraft position information regarding the aircraft from another source, for example ACARS data, and it will be preferable to determine if the new ADS-B data corresponds to a new aircraft to be plotted or alternatively if it corresponds to the existing aircraft. From the result of this determination, the new data may be merged and harmonised with the existing data.

One way of determining if the new data corresponds to an existing aircraft data feed would be to determine the positional distance between a pair of aircraft position information data points from the respective data feeds that correspond to positions within a given time frame and to further determine if it would be feasible for the same aircraft to have covered the determined distance in that amount of time. This can be used as a sense check to verify that data feeds using different means for identifying a given aircraft do correspond to the same aircraft rather than a different aircraft that has been used to replace the aircraft that was originally intended to fly that route, for example due to delays.

Various sources of data may also identify an "off-time", when the aircraft takes off, and an "on-time", when the aircraft lands. There may be a discrepancy of a few minutes between these respective times and accordingly the processor 34 must determine which of these sources is to be prioritised based on the relative accuracy of the data sources.

The processor 34 may then proceed to filter and smooth the data in order to arrive at a reduced data set. The buffer 33 may be a circular buffer and the filtering may involve using a sampling filter that samples based on temporal and precision criteria. For example, it may be only the top 4 most accurate data points received within a period of one minute that are smoothed and plotted onto the electronic geographical mapping data. Alternatively, the filtering may select only the most accurate data point received within the last minute.

As described above, ADS-B data is broadcast with a positional accuracy of five decimal places and a temporal accuracy of 1 second; accordingly ADS-B data will be preferenced over ACARS data, which has a positional accuracy of three decimal places and a temporal accuracy of 1 minute, when filtering the aircraft position information received within a given time period to ensure that the total number of data points in that time period does not exceed the limit.

The smoothing process may include averaging position information between the filtered data points. This smoothed aircraft position information data may then be output by the processor 34 to an output interface 36 and presented as a layer overlaid on the electronic geographical mapping data on a display device.

The processor 34 may comprise one or more special purpose processing devices such as an application specific integrated circuit (ASIC), a field programmable gate array (FPGA), a digital signal processor (DSP), network processor, or other similar devices. The processor 34 is configured to perform the operations and methods disclosed below. These operations may be carried out by a single processor or, alternatively, may be carried out by a number of processors connected together.

In the event that no aircraft position information is received for a given aircraft from any of the position information sources within a given time period, the position of the aircraft may be estimated by extrapolating the aircraft's previous flight speed and trajectory. This estimated position may be plotted on the electronic geographical mapping data and may also be marked out in some manner to highlight that it is only an estimated aircraft position and not an actual received aircraft position.

In the event that no ACARS aircraft position information is plotted onto the electronic geographical mapping data for a given time period (because the received ACARS aircraft position information has been filtered out in favour of more accurate aircraft position information) the processor may be configured to plot the ACARS data point in addition to the data points that had been maintained in the filtered list. This additional position information may be included for the benefit of the end user.

When an ACARS data point is plotted in addition to the data points that have been maintained in the filtered list, the ACARS data point is preferably not smoothed with respect to the filtered list of data points and instead is simply plotted alongside the smoothed aircraft position information if the ACARS data point does not sit on the flight curve of the smoothed aircraft position information.

In this manner, the apparatus 22 combines and processes various data sets in order to provide users with an enhanced capability to monitor and accurately track one or more aircraft 12 with a visual representation being overlaid onto a geographical map for ease of use. The apparatus 22 provides airline ground staff with a greater visibility of the current status of aircraft 12 and allows any disruption to the flight schedule, for example disruption due to holding or re-routing an aircraft, to be identified quickly and centrally.

Additional aircraft position information may also be combined with the aggregated aircraft position information; for example, radar aircraft position data or Eurocontrol 4-D Trajectory data may be collected at a fourth receiver 38 and included in the aggregated aircraft position data that is filtered, processed and smoothed by the processor 34 in order to produce the smoothed aircraft position information data.

In further examples, additional data sets may be presented as additional layers to be overlaid on the same electronic geographical mapping data as the aircraft position information. These data sets may comprise weather data received at a fifth receiver 40 or flight plan data corresponding to the aircraft 12 that is received at a sixth receiver 42 and may also be updated periodically.

Furthermore, the aircraft position information monitored may be collected and saved as historic data in a data store 44 for future analysis in order to assess and improve aircraft operational efficiency.

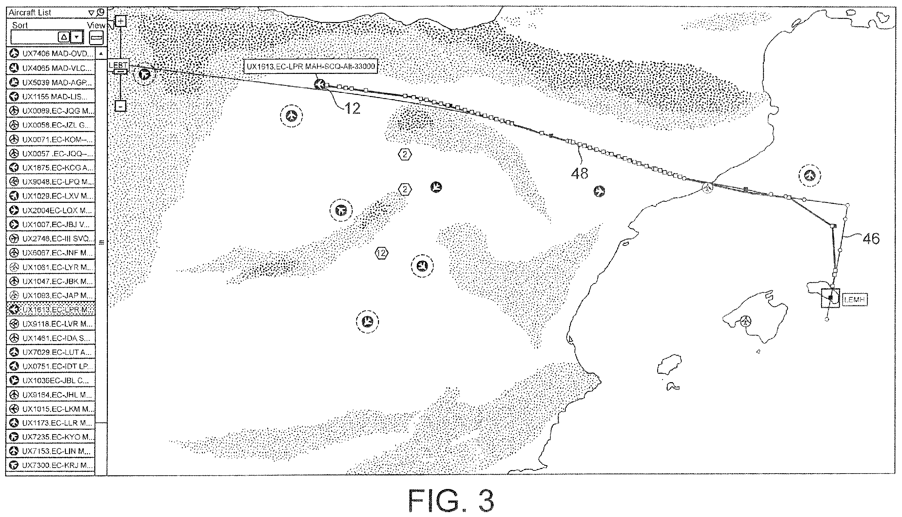

With reference to Figure 3, example electronic geographical mapping data is depicted overlaid with flight plan data 46 corresponding to an aircraft 12 as well as live aircraft position information 48. As can be seen from the position information plotted in Figure 3, the ACARS aircraft position information (shown as black squares) is significantly less regular than the ADS-B aircraft position information (shown as white squares). Flight plan waypoints are shown as white circles.

The aircraft position information may be stored temporarily in an output buffer or a data store in order to allow a record of the aircraft's actual flight path to be output by the apparatus. This can the be viewed and optionally compared with the original flight plan.

Furthermore, this data may be stored in a permanent data store in order to make the aircraft position information available for further analysis at a later time. This analysis can enable aircraft operators to determine any inefficiencies that have occurred in their past operations such that they can be taken into consideration and used to optimise future operations.

The end user will preferably be able to zoom and pan around the geographical mapping data in real time, which means dynamically determining which subsets of objects are (e.g. aircraft and airports) visible and, in the worst case, displaying all objects on screen simultaneously. Furthermore, in order to be able to display and update both the enormous numbers of dynamic and static objects in an internet browser window, mechanisms (such as algorithms) may be implemented to manage the dynamic data and avoid browsers fetching data that had not changed since the last transaction. This can be achieved by only pushing aircraft data to browsers for update if the aircraft data has changed since the last update.

For static objects (such as airport location data, Flight Information Regions or coverage regions), the space can be partitioned into a number of tiles and objects are partitioned on a tile server for display. This allows static objects to be grouped as a single tile object that can be loaded and will remain valid for a sustained period of time because the information regarding these objects rarely changes. One problem was that the geographical mapping data can be viewed at different zoom levels and accordingly the number of tiles across all zoom levels added up exponentially. Thus the number of tiles being managed is preferably reduced by only managing those tiles with useful information.

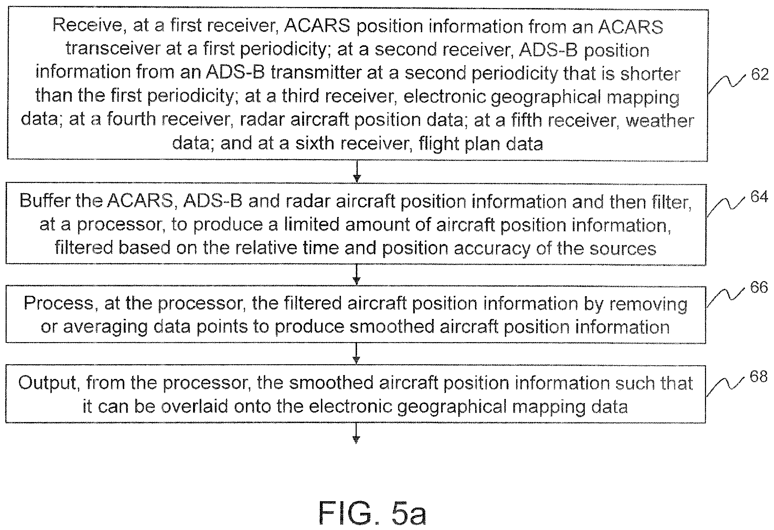

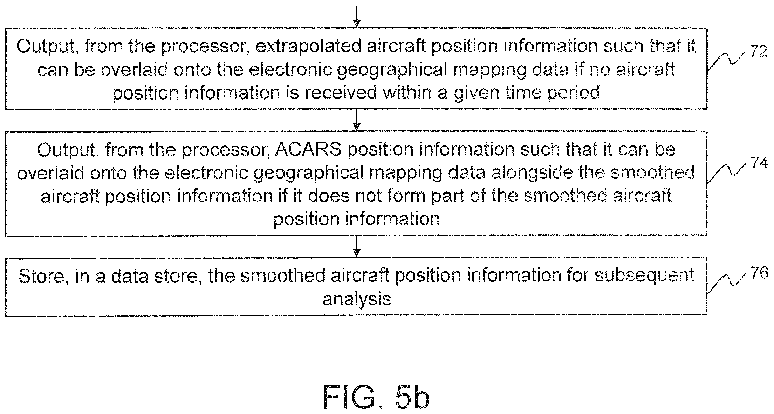

According to a second aspect of the invention, and with reference to Figure 5, a computerised method may be provided comprising receiving first aircraft position information (in the form of ACARS messages containing position information) at a first receiver over a digital data link from a first radio frequency source 50, receiving second aircraft position information (in the form of ADS-B broadcasts) at a second receiver from a second radio frequency source 52 and receiving electronic geographical mapping data 54 at a third receiver.

The first and second aircraft position information is received from respective radio frequency sources located onboard the aircraft and via one or more ground stations. The first and second aircraft position information is then received at a buffer to be buffered and then filtered 56 to limit the number of aircraft position information data points processed within each time period and produce filtered aircraft position information. The filtered aircraft position information is then further processed 58 to produce smoothed aircraft position information, which can then be output 60 from the processor such that it can be overlaid onto the electronic geographical mapping data.

In another embodiment of the second aspect of the invention, and with reference to Figures 5a and 5b, a computerised method may be provided comprising receiving 62 , at a first receiver, ACARS position information from an ACARS transceiver at a first periodicity; at a second receiver, ADS-B position information from an ADS-B transmitter at a second periodicity that is shorter than the first periodicity; at a third receiver, electronic geographical mapping data; at a fourth receiver, radar aircraft position data; at a fifth receiver, weather data; and at a sixth receiver, flight plan data. This embodiment receives a number of additional data types from various sources; as will be appreciated by the skilled person, intermediate embodiments may include receiving only some of these additional data types.

The computerised method may then buffer 64 the ACARS, ADS-B and radar aircraft position information and then filter, at a processor, to produce a limited amount of aircraft position information, filtered based on the relative time and position accuracy of the sources. This filtered aircraft position information may then be further processed 66 at the processor to produce smoothed aircraft position information, for example by removing erroneous data points or averaging data points.

Once the data has been processed, the smoothed aircraft position information may be output 68 such that it can be overlaid onto the electronic geographical mapping data.

In this embodiment, the processor can be configured to output 72 extrapolated aircraft position information if no aircraft position information is received within a given time period. This extrapolated aircraft position information is preferably output such that it can be overlaid onto the electronic geographical mapping data.

Furthermore, the computerised method may also cause the processor to output ACARS position information such that it can be overlaid onto the electronic geographical mapping data alongside the smoothed aircraft position information even if it does not form part of the smoothed aircraft position information. This means that the ACARS position information can be plotted on the electronic geographical mapping data even when the ACARS aircraft position information has been filtered out by the processor in favour of more accurate aircraft position information. This provides additional position information that is desirable by the end user.

When an ACARS data point is plotted in addition to the data points that have been maintained in the filtered list, the computerised method is preferably arranged not to smooth the ACARS data point with respect to the filtered list of data points. Instead, the ACARS data point is preferably simply plotted alongside the smoothed aircraft position information in its recorded position, even if this means that the ACARS data point does not sit on the flight curve shown by the smoothed aircraft position information.

Preferably, the computerised method also causes 76 the smoothed aircraft position information to be stored in a data store for subsequent analysis.

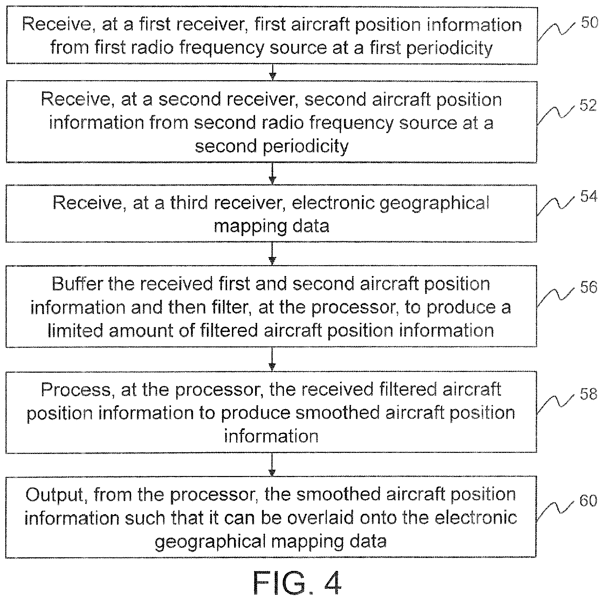

The flowcharts of Figures 4, 5a and 5b illustrate the operation of an example implementation of the apparatus, computerised method and computer program products according to an embodiment of the present invention. Each block in the flowchart may represent a module comprising one or more executable computer instructions, or a portion of an instruction, for implementing the logical function specified in the block. The order of blocks in the diagram is only intended to be illustrative of an example. In alternative implementations, the logical functions illustrated in particular blocks may occur out of the order noted in the figures. For example, the processed associated with two blocks may be carried out simultaneously or, depending on the functionality, in the reverse order. Each block in the flowchart may be implemented in software, hardware or a combination of software and hardware.

Embodiments of the invention provide a computerised method and apparatus for monitoring an aircraft that delivers highly accurate and dynamic aggregate aircraft position information that has the ability to track flight deviations and weather patterns in order to support the corresponding decision making processes of the aircraft operator with an increased visibility of the current aircraft location.

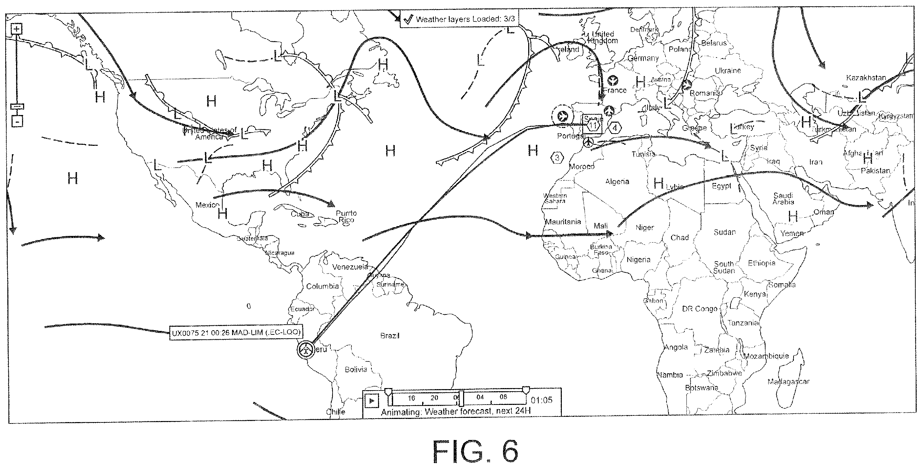

Figure 6 shows an example of mapping data including aircraft position information being overlaid with weather data. The weather data may comprise current weather observations (sometimes referred to as a nowcast) and weather forecasts relating to fronts, pressure systems, jetstreams, tropopause boundaries, lighting density, icing conditions, turbulence, thunderstorms and other Significant Meteorological Information (SIGMETs).

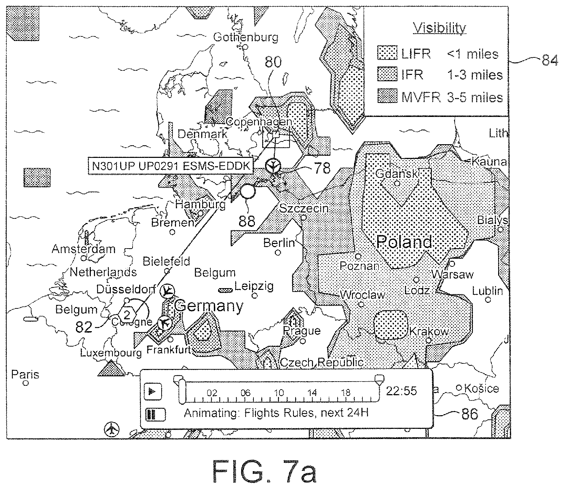

As shown in Figures 7a to 7c, the forecasted weather data may be animated on the mapping data alongside the currently estimated flight path in order to enable users to more accurately analyse and identify any potential weather issues that might impact an aircraft based on its planned routing and the current position of the aircraft.

Some time-bound layers, such as observed satellite images, radar or forecasted turbulences, are best represented as animating over time.

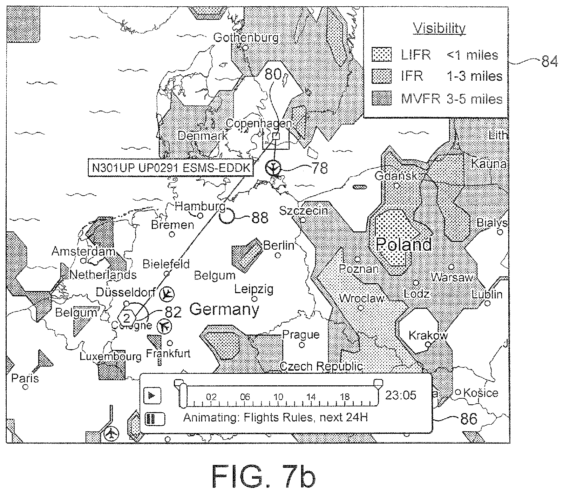

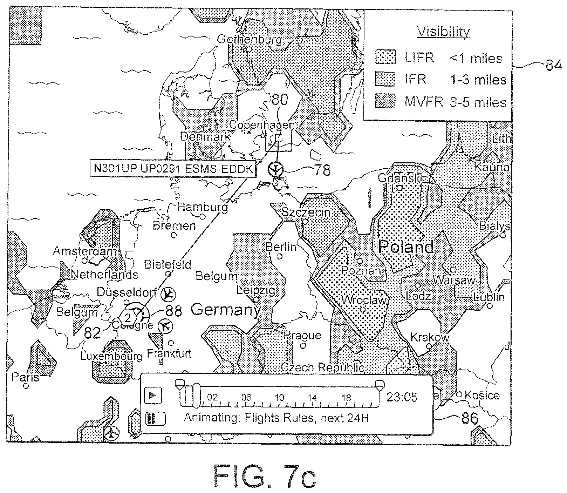

Figure 7a shows a current aircraft position icon 78 of an aircraft that has taken off from a first airport 80 and is due to land at a second airport 82. The forecasted weather data has been overlaid on the mapping data and a legend 84 has optionally been included to enable the user to interpret the weather data. The forecast weather data may be animated by pressing play on the time bar window 86 at the bottom of Figure 7a. The time bar window 86 is the controller for the display of the animated weather layers, which can either be played or paused and positioned manually. Figures 7b and 7c then show the progression of the forecast weather pattern over time as illustrated by the changing time represented on the right hand side of the time bar window 86 and the movement of the time bar.

Since these animations represent the weather patterns forecast for the future, while the current aircraft position icon 78 represents the current position of an aircraft, an estimated aircraft position icon 88 has been included in the animation in order identify where the aircraft is estimated to be at the time that is selected by the time bar and being displayed with respect to the forecasted weather. This allows the user to easily determine the impact that the moving weather pattern will have on the aircraft's flight.

This estimated flight path may be based on an extrapolation from the current position, speed and trajectory of the aircraft on a great-circle trajectory (straightest line around the Earth) between the aircraft's actual position and the second airport 82. Alternatively, if flight plan data is available then the estimated flight path may be estimated based on the original flight plan, taking into account the planned waypoint information included in the flight plan data. For example, the aircraft operator may be able to determine that a given aircraft will need to be diverted from its planned route, thus allow the aircraft operator to consider any knock on effects that this diversion may have ahead of time.

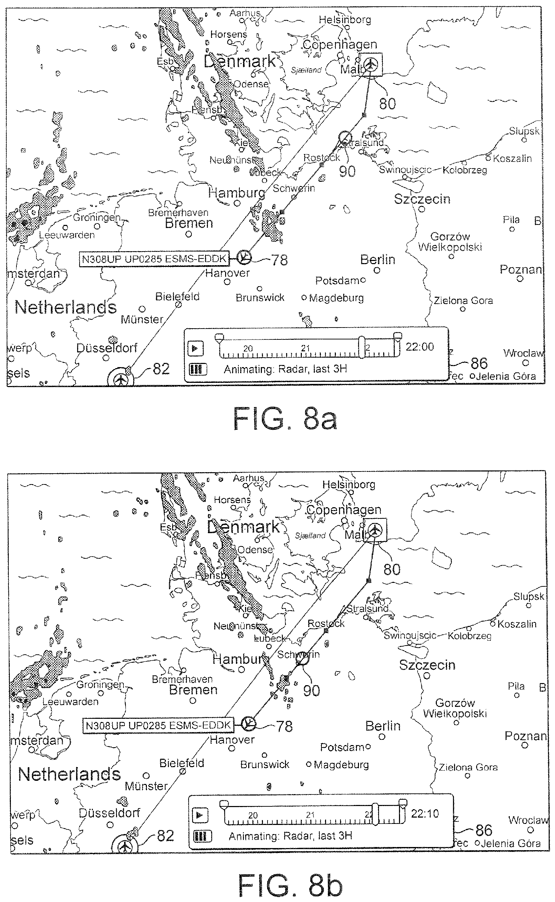

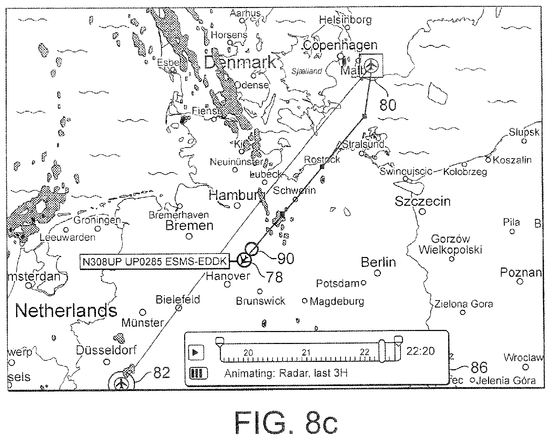

A similar principle may be used with weather data the represents observed weather patterns, i.e. weather that has already occurred. As can be seen from Figures 8a to 8c, the estimated aircraft position icon 88 has been replaced with a historic aircraft position icon 90 that indicates where the aircraft was at the time indicated in the time bar window 86. This historic aircraft position icon 90 may represent an interpolation between two observed aircraft positions.

However, the current aircraft position icon 78 is preferably always displayed and maintained in the aircraft's current location so that the aircraft's current location can always be identified easily, quickly and without confusion from any animated past or future positions.

## Claims

1. An apparatus (22) for monitoring the position of one or more aircraft (12), comprising:
a first receiver device (28) configured to receive first aircraft position information, over a digital data link, from a first radio frequency source located onboard the aircraft (12) at a first periodicity, via one or more ground stations (16);
a second receiver device (30) configured to receive second aircraft position information broadcasted from a second radio frequency source located onboard the aircraft (12) at a second periodicity, via one or more ground stations (10);
a buffer (33) configured to receive the first and second aircraft position information from the first (28) and second (30) receiver devices respectively;
a processor (34) configured to receive and filter the buffered first and second aircraft position information; and to smooth the filtered aircraft position information and to output the smoothed aircraft position information such that it can be overlaid onto electronic geographical mapping data;
**characterised in that**
the processor (34) is configured to filter the first and second aircraft position information such that the quantity of position information data smoothed for a given aircraft (12) is within a given limit for a given time period; and
**in that** the processor (34) is configured to filter the aircraft position information based on the relative positional accuracy and the relative temporal accuracy of the respective sources that the aircraft position information is received from.

2. An apparatus according to claim 1, wherein the processor (34) is configured to smooth the filtered aircraft position information by removing erroneous data points or by averaging data points.

3. An apparatus according to claim 1 or 2, wherein the second period is shorter than the first periodicity;
wherein the first radio frequency source comprises an Aircraft Communications Addressing and Reporting System (ACARS) transceiver and the first aircraft position information is ACARS aircraft position information;
wherein the second radio frequency source comprises an Automatic Dependent Surveillance-Broadcast transmitter; and
wherein the one or more ground stations may comprise a VHF ground station (10), a HF ground station (10) or a satellite ground station (20).

4. An apparatus according to any preceding claim, further comprising a fourth receiver (38) configured to receive radar aircraft position data, wherein the processor (34) is configured to filter the radar aircraft position data in combination with the first and second aircraft position information such that the quantity of position information data smoothed is within a given limit for a given time period.

5. An apparatus according to any preceding claim, further comprising a fifth receiver (40) configured to receive weather data, wherein the processor (34) is further configured to output the weather data such that it can be overlaid onto the electronic geographical mapping data and smoothed aircraft position information.

6. An apparatus according to any preceding claim, further comprising a sixth receiver (42) configured to receive flight plan data corresponding to the aircraft (12), wherein the processor (34) is further configured to output the flight plan data such that it can be overlaid onto the electronic geographical mapping data and smoothed aircraft position information.

7. An apparatus according to any preceding claim, wherein the buffer (33) is a circular buffer and wherein the processor filter comprises a sampling filter for filtering and sorting the aircraft position information to be included in a reduced set of aircraft position information, wherein the sampling filter is based on temporal and precision criteria.

8. An apparatus according to any preceding claim, further comprising a data store (44) configured to store the smoothed aircraft position information for subsequent analysis;
wherein the processor (34) is configured to identify aircraft position data relating to a given aircraft (12) by a data matching engine.

9. An apparatus according to any preceding claim, wherein the processor (34) is configured to output extrapolated aircraft position information such that it can be overlaid onto the electronic geographical mapping data if no aircraft position information is received at the processor for a given aircraft within a given time period.

10. An apparatus according to any of claims 4 to 9, when dependent on claim 3, wherein the processor (34) is configured to output ACARS aircraft position information such that it can be overlaid onto the electronic geographical mapping data alongside the smoothed aircraft position information if the ACARS aircraft position information does not form part of the smoothed aircraft position information.

11. A computerised method for monitoring the position of one or more aircraft, comprising:
receiving (50), at a first receiver device, first aircraft position information, over a digital data link, from a first radio frequency source located onboard the aircraft at a first periodicity, via one or more ground stations;
receiving (52), at a second receiver device, second aircraft position information broadcasted from a second radio frequency source located onboard the aircraft at a second periodicity, via one or more ground stations;
receiving (56), at a buffer, the received first and second aircraft position information and producing buffered first and second aircraft position information;
processing (56), at a processor, the buffered first and second aircraft position information to filter the first and second aircraft position information;
processing (58), at the processor, the filtered aircraft position information to produce smoothed aircraft position information; and
outputting (60), from the processor, the smoothed aircraft position information such that it can be overlaid onto electronic geographical mapping data;
**characterised in that**
the processor filters the first and second aircraft position information such that the quantity of position information data smoothed for a given aircraft is within a given limit for a given time period; and
**in that** the processor filters aircraft position information based on the relative positional accuracy and the relative temporal accuracy of the respective sources that the aircraft position information is received from.

12. A computerised method according to claim 11, wherein the second periodicity is shorter than the first periodicity;
wherein the first aircraft position information is received (62), at the first receiver, from an Aircraft Communications Addressing and Reporting System (ACARS) transceiver and the first aircraft position information is ACARS aircraft position information;
wherein the second aircraft position information is received (62), at the second receiver, from an Automatic Dependent Surveillance-Broadcast transmitter; and
wherein the first and second aircraft position information may be received via one or more of a VHF ground station, a HF ground station or a satellite ground station.

13. A computerised method according to claim 11 or 12, wherein the buffer is a circular buffer and wherein the processor filtering step comprises using a sampling filter to filter and sort the aircraft position information to be included in a reduced set of aircraft position information, the sampling filter optionally being based on temporal and precision criteria.

14. A computerised method according to any of claims 11 to 13, wherein the processor further outputs (72) extrapolated aircraft position information such that it can be overlaid onto the electronic geographical mapping data if no aircraft position information is received at the processor for a given aircraft within a given time period.

15. A computerised method according to any of claims 12 to 14, when dependent on claim 20, wherein the processor further outputs (74) ACARS aircraft position information such that it can be overlaid onto the electronic geographical mapping data alongside the smoothed aircraft position information if the ACARS aircraft position information does not form part of the smoothed aircraft position information.

## Patentansprüche

1. Einrichtung (22) zur Überwachung der Position eines oder mehrerer Flugzeuge (12), umfassend:
eine erste Empfängervorrichtung (28), die derart konfiguriert ist, dass sie erste Flugzeugpositionsinformationen über eine digitale Datenverbindung von einer ersten Funkfrequenzquelle, die sich an Bord des Flugzeugs (12) befindet, in einer ersten Periodizität über eine oder mehrere Bodenstationen (16) empfängt;
eine zweite Empfängervorrichtung (30), die derart konfiguriert ist, dass sie zweite Flugzeugpositionsinformationen empfängt, die von einer zweiten Funkfrequenzquelle, die sich an Bord des Flugzeugs (12) befindet, in einer zweiten Periodizität über eine oder mehrere Bodenstationen (10) gesendet werden;
einen Puffer (33), der derart konfiguriert ist, dass er die ersten und die zweiten Flugzeugpositionsinformationen von der ersten (28) beziehungsweise der zweiten (30) Empfängervorrichtung empfängt;
einen Prozessor (34), der derart konfiguriert ist, dass er die gepufferten ersten und zweiten Flugzeugpositionsinformationen empfängt und filtert; und die gefilterten Flugzeugpositionsinformationen glättet und die geglätteten Flugzeugpositionsinformationen derart ausgibt, dass sie auf elektronische geographische Abbildungsdaten überlagert werden können;
**dadurch gekennzeichnet, dass**:
der Prozessor (34) derart konfiguriert ist, dass er die ersten und die zweiten Flugzeugpositionsinformationen derart filtert, dass die Menge der für ein gegebenes Flugzeug (12) geglätteten Positionsinformationsdaten für eine gegebene Zeitdauer innerhalb einer gegebenen Grenze liegt; und
dadurch, dass
der Prozessor (34) derart konfiguriert ist, dass er die Flugzeugpositionsinformationen auf der Grundlage der relativen Positionsgenauigkeit und der relativen zeitlichen Genauigkeit der jeweiligen Quellen filtert, von denen die Flugzeugpositionsinformationen empfangen werden.

2. Einrichtung nach Anspruch 1, wobei der Prozessor (34) derart konfiguriert ist, dass er die gefilterten Flugzeugpositionsinformationen durch ein Entfernen fehlerhafter Datenpunkte oder durch ein Mitteln von Datenpunkten glättet.

3. Einrichtung nach Anspruch 1 oder 2, wobei der zweite Zeitabschnitt kürzer als die erste Periodizität ist;
wobei die erste Funkfrequenzquelle einen Transceiver für ein Adressierungs- und Berichtssystem für die Flugzeugkommunikation (*Aircraft Communications Addressing and Reporting System* - ACARS) umfasst und die ersten Flugzeugpositionsinformationen die ACARS-Flugzeugpositionsinformationen sind;
wobei die zweite Funkfrequenzquelle einen Sender für eine automatische Aussendung abhängiger Beobachtungsdaten (*Automatic Dependent Surveillance-Broadcast*) umfasst; und
wobei die eine oder die mehreren Bodenstationen eine VHF-Bodenstation (10), eine HF-Bodenstation (10) oder eine Satellitenbodenstation (20) umfassen können.

4. Einrichtung nach einem der vorhergehenden Ansprüche, ferner umfassend einen vierten Empfänger (38), der derart konfiguriert ist, dass er Radar-Flugzeugpositionsdaten empfängt, wobei der Prozessor (34) derart konfiguriert ist, dass er die Radar-Flugzeugpositionsdaten in Kombination mit den ersten und den zweiten Flugzeugpositionsinformationen derart filtert, dass die Menge der geglätteten Positionsinformationsdaten für eine gegebene Zeitdauer innerhalb einer gegebenen Grenze liegt.

5. Einrichtung nach einem der vorhergehenden Ansprüche, ferner umfassend einen fünften Empfänger (40), der derart konfiguriert ist, dass er Wetterdaten empfängt, wobei der Prozessor (34) ferner derart konfiguriert ist, dass er die Wetterdaten derart ausgibt, dass sie auf die elektronischen geographischen Abbildungsdaten und die geglätteten Flugzeugpositionsinformationen überlagert werden können.

6. Einrichtung nach einem der vorhergehenden Ansprüche, ferner umfassend einen sechsten Empfänger (42), der derart konfiguriert ist, dass er dem Flugzeug (12) entsprechende Flugplandaten empfängt, wobei der Prozessor (34) ferner derart konfiguriert ist, dass er die Flugplandaten derart ausgibt, dass sie auf die elektronischen geographischen Abbildungsdaten und die geglätteten Flugzeugpositionsinformationen überlagert werden können.

7. Einrichtung nach einem der vorhergehenden Ansprüche, wobei der Puffer (33) ein Ringpuffer ist und wobei das Prozessorfilter ein Abtastfilter zum Filtern und Sortieren der Flugzeugpositionsinformationen umfasst, die in einem reduzierten Satz von Flugzeugpositionsinformationen enthalten sein sollen, wobei das Abtastfilter auf Zeit- und Präzisionskriterien basiert ist.

8. Einrichtung nach einem der vorhergehenden Ansprüche, ferner umfassend einen Datenspeicher (44), der derart konfiguriert ist, dass er die geglätteten Flugzeugpositionsinformationen für eine nachfolgende Analyse speichert;
wobei der Prozessor (34) derart konfiguriert ist, dass er Flugzeugpositionsdaten, die sich auf ein gegebenes Flugzeug (12) beziehen, durch ein Datenabgleichsmodul identifiziert.

9. Einrichtung nach einem der vorhergehenden Ansprüche, wobei der Prozessor (34) derart konfiguriert ist, dass er extrapolierte Flugzeugpositionsinformationen derart ausgibt, dass sie auf die elektronischen geographischen Abbildungsdaten überlagert werden können, wenn für ein gegebenes Flugzeug innerhalb einer gegebenen Zeitdauer keine Flugzeugpositionsinformationen an dem Prozessor empfangen werden.

10. Einrichtung nach einem der Ansprüche 4 bis 9, wenn von Anspruch 3 abhängig, wobei der Prozessor (34) derart konfiguriert ist, dass er ACARS-Flugzeugpositionsinformationen derart ausgibt, dass sie auf die elektronischen geographischen Abbildungsdaten neben den geglätteten Flugzeugpositionsinformationen überlagert werden können, wenn die ACARS-Flugzeugpositionsinformationen keinen Teil der geglätteten Flugzeugpositionsinformationen ausbilden.

11. Computergestütztes Verfahren zum Überwachen der Position eines oder mehrerer Flugzeuge, umfassend:
Empfangen (50) an einer ersten Empfängervorrichtung erster Flugzeugpositionsinformationen über eine digitale Datenverbindung von einer ersten Funkfrequenzquelle, die sich an Bord des Flugzeugs befindet, in einer ersten Periodizität über eine oder mehrere Bodenstationen;
Empfangen (52) an einer zweiten Empfängervorrichtung zweiter Flugzeugpositionsinformationen, die von einer zweiten Funkfrequenzquelle, die sich an Bord des Flugzeugs befindet, in einer zweiten Periodizität über eine oder mehrere Bodenstationen gesendet werden;
Empfangen (56) an einem Puffer der empfangenen ersten und zweiten Flugzeugpositionsinformationen und Erzeugen gepufferter erster und zweiter Flugzeugpositionsinformationen;
Verarbeiten (56) in einem Prozessor der gepufferten ersten und zweiten Flugzeugpositionsinformationen, um die ersten und die zweiten Flugzeugpositionsinformationen zu filtern;
Verarbeiten (58) in dem Prozessor der gefilterten Flugzeugpositionsinformationen, um geglättete Flugzeugpositionsinformationen zu erzeugen; und
Ausgeben (60) durch den Prozessor der geglätteten Flugzeugpositionsinformationen derart, dass sie auf elektronische geographische Abbildungsdaten überlagert werden können;
**dadurch gekennzeichnet, dass** der Prozessor die ersten und die zweiten Flugzeugpositionsinformationen derart filtert, dass die Menge der für ein gegebenes Flugzeug geglätteten Positionsinformationsdaten für eine gegebene Zeitdauer innerhalb einer gegebenen Grenze liegt; und
dadurch, dass
der Prozessor Flugzeugpositionsinformationen auf der Grundlage der relativen Positionsgenauigkeit und der relativen zeitlichen Genauigkeit der jeweiligen Quellen filtert, von denen die Flugzeugpositionsinformationen empfangen werden.

12. Computergestütztes Verfahren nach Anspruch 11, wobei die zweite Periodizität kürzer als die erste Periodizität ist;
wobei die ersten Flugzeugpositionsinformationen an dem ersten Empfänger von einem Transceiver für ein Adressierungs- und Berichtssystem für die Flugzeugkommunikation (ACARS) empfangen (62) werden und die ersten Flugzeugpositionsinformationen ACARS-Flugzeugpositionsinformationen sind;
wobei die zweiten Flugzeugpositionsinformationen an dem zweiten Empfänger von einem Sender für eine automatische Aussendung abhängiger Beobachtungsdaten empfangen (62) werden; und
wobei die ersten und die zweiten Flugzeugpositionsinformationen über eine VHF-Bodenstation, eine HF-Bodenstation und/oder eine Satellitenbodenstation empfangen werden können.

13. Computergestütztes Verfahren nach Anspruch 11 oder 12, wobei der Puffer ein Ringpuffer ist und wobei der Prozessor-Filterschritt ein Verwenden eines Abtastfilters zum Filtern und Sortieren der Flugzeugpositionsinformationen umfasst, die in einen reduzierten Satz von Flugzeugpositionsinformationen enthalten sein sollen, wobei das Abtastfilter optional auf Zeit- und Präzisionskriterien basiert ist.

14. Computergestütztes Verfahren nach einem der Ansprüche 11 bis 13, wobei der Prozessor ferner extrapolierte Flugzeugpositionsinformationen derart ausgibt (72), dass sie auf die elektronischen geographischen Abbildungsdaten überlagert werden können, wenn für ein gegebenes Flugzeug innerhalb einer gegebenen Zeitdauer keine Flugzeugpositionsinformationen an dem Prozessor empfangen werden.

15. Computergestütztes Verfahren nach einem der Ansprüche 12 bis 14, wenn von Anspruch 20 abhängig, wobei der Prozessor ferner ACARS-Flugzeugpositionsinformationen derart ausgibt (74), dass sie auf die elektronischen geographischen Abbildungsdaten neben den geglätteten Flugzeugpositionsinformationen überlagert werden können, wenn die ACARS-Flugzeugpositionsinformationen keinen Teil der geglätteten Flugzeugpositionsinformationen ausbilden.

## Revendications

1. Appareil (22) de surveillance de position d'un ou de plusieurs avions (12), comprenant :
un premier dispositif récepteur (28) conçu pour recevoir des premières informations de position d'avion, sur une liaison de données numériques, à partir d'une première source de radiofréquence placée à bord de l'avion (12) à une première périodicité, par l'intermédiaire d'une ou de plusieurs stations au sol (16) ;
un second dispositif récepteur (30) conçu pour recevoir des secondes informations de position d'avion diffusées à partir d'une seconde source de radiofréquence placée à bord de l'avion (12) à une seconde périodicité, par l'intermédiaire d'une ou de plusieurs stations au sol (10) ;
un tampon (33) conçu pour recevoir respectivement les première et seconde informations de position d'avion provenant des premier (28) et second (30) dispositifs récepteurs respectivement ;
un processeur (34) conçu pour recevoir et filtrer les première et seconde informations de position d'avion mises en mémoire tampon ; et pour lisser les informations de position d'avion filtrées et pour délivrer en sortie les informations de position d'avion lissées de sorte qu'elles puissent être superposées sur des données de mappage géographique électroniques ;
**caractérisé en ce que**
le processeur (34) est conçu pour filtrer les première et seconde informations de position d'avion de sorte que la quantité de données d'informations de position lissées pour un avion donné (12) soit dans une limite donnée pendant une période de temps donnée ; et
**en ce que** le processeur (34) est conçu pour filtrer les informations de position d'avion sur la base de la précision de position relative et de la précision temporelle relative des sources respectives à partir desquelles les informations de position d'avion sont reçues.

2. Appareil selon la revendication 1, dans lequel le processeur (34) est conçu pour lisser les informations de position d'avion filtrées en supprimant des points de données erronés ou en calculant la moyenne des points de données.

3. Appareil selon la revendication 1 ou 2, dans lequel la seconde période est plus courte que la première périodicité ;
dans lequel la première source de radiofréquence comprend un émetteur-récepteur de système embarqué de communications, d'adressage et de compte rendu (ACARS) et les premières informations de position d'avion sont des informations de position d'avion ACARS ;
dans lequel la seconde source de radiofréquence comprend un émetteur de surveillance-transmission dépendante automatique ; et
dans lequel les une ou plusieurs stations au sol peuvent comprendre une station au sol VHF (10), une station au sol HF (10) ou une station satellite au sol (20).

4. Appareil selon une quelconque revendication précédente, comprenant en outre un quatrième récepteur (38) conçu pour recevoir des données de position radar d'avion, dans lequel le processeur (34) est conçu pour filtrer les données de position radar d'avion en combinaison avec les première et seconde informations de position d'avion de sorte que la quantité de données d'informations de position lissées se situe dans une limite donnée pendant une période de temps donnée.

5. Appareil selon une quelconque revendication précédente, comprenant en outre un cinquième récepteur (40) conçu pour recevoir des données météorologiques, dans lequel le processeur (34) est en outre conçu pour délivrer en sortie les données météorologiques de sorte qu'elles puissent être superposées sur les données de mappage géographique électroniques et sur les informations de position d'avion lissées.

6. Appareil selon une quelconque revendication précédente, comprenant en outre un sixième récepteur (42) conçu pour recevoir des données de plan de vol correspondant à l'avion (12), dans lequel le processeur (34) est en outre conçu pour délivrer en sortie les données de plan de vol de sorte qu'elles puissent être superposées sur les données de mappage géographique électroniques et sur les informations de position d'avion lissées.

7. Appareil selon une quelconque revendication précédente, dans lequel le tampon (33) est un tampon circulaire et dans lequel le filtre de processeur comprend un filtre d'échantillonnage pour filtrer et trier les informations de position d'avion à inclure dans un ensemble réduit d'informations de position d'avion, dans lequel le filtre d'échantillonnage est basé sur des critères temporels et de précision.

8. Appareil selon une quelconque revendication précédente, comprenant en outre une mémoire de données (44) conçue pour stocker les informations de position d'avion lissées pour une analyse ultérieure ;
dans lequel le processeur (34) est conçu pour identifier les données de position d'avion relatives à un avion donné (12) par un moteur d'appariement de données.

9. Appareil selon une quelconque revendication précédente, dans lequel le processeur (34) est conçu pour délivrer en sortie des informations de position d'avion extrapolées de sorte qu'elles puissent être superposées sur les données de mappage géographique électroniques si aucune information de position d'avion n'est reçue au niveau du processeur pour un avion donné dans une période de temps donnée.

10. Appareil selon l'une quelconque des revendications 4 à 9, lorsqu'elles dépendent de la revendication 3, dans lequel le processeur (34) est conçu pour délivrer en sortie des informations de position d'avion ACARS de sorte qu'elle puissent être superposées sur les données de mappage géographique électroniques à côté des informations de position d'avion lissées si les informations de position d'avion ACARS ne font pas partie des informations de position d'avion lissées.

11. Procédé informatisé de surveillance de position d'un ou de plusieurs avions, comprenant :
la réception (50), au niveau d'un premier dispositif récepteur, des premières informations de position d'avion, sur une liaison de données numériques, à partir d'une première source de radiofréquence placée à bord de l'avion à une première périodicité, par l'intermédiaire d'une ou de plusieurs stations au sol ;
la réception (52), au niveau d'un second dispositif récepteur, des secondes informations de position d'avion diffusées à partir d'une seconde source de radiofréquence placée à bord de l'avion à une seconde périodicité, par l'intermédiaire d'une ou de plusieurs stations au sol ;
la réception (56), au niveau d'un tampon, des première et seconde informations de position d'avion reçues et la production des première et seconde informations de position d'avion mises en mémoire tampon ;
le traitement (56), au niveau d'un processeur, des première et seconde informations de position d'avion mises en mémoire tampon pour filtrer les première et seconde informations de position d'avion ;
le traitement (58), au niveau du processeur, des informations de position d'avion filtrées pour produire des informations de position d'avion lissées ; et
la délivrance en sortie (60), à partir du processeur, des informations de position d'avion lissées de sorte qu'elles puissent être superposées sur les données de mappage géographique électroniques ;
**caractérisé en ce que** le processeur filtre les première et seconde informations de position d'avion de sorte que la quantité de données d'informations de position lissées pour un avion donné soit dans une limite donnée pendant une période de temps donnée ; et
**en ce que** le processeur filtre les informations de position d'avion sur la base de la précision de position relative et de la précision temporelle relative des sources respectives à partir desquelles les informations de position d'avion sont reçues.

12. Procédé informatisé selon la revendication 11, dans lequel la seconde périodicité est plus courte que la première périodicité ;
dans lequel les premières informations de position d'avion sont reçues (62), au niveau du premier récepteur, d'un émetteur-récepteur de système embarqué de communications, d'adressage et de compte rendu (ACARS) et les premières informations de position d'avion sont des informations de position d'avion ACARS ;
dans lequel les secondes informations de position d'avion sont reçues (62), au niveau du deuxième récepteur, à partir d'un émetteur de surveillance-transmission dépendante automatique ; et
dans lequel les première et seconde informations de position d'avion peuvent être reçues par l'intermédiaire d'une ou de plusieurs parmi une station au sol VHF, une station au sol HF ou une station satellite au sol.

13. Procédé informatisé selon la revendication 11 ou 12, dans lequel le tampon est un tampon circulaire et dans lequel l'étape de filtration du processeur comprend l'utilisation d'un filtre d'échantillonnage pour filtrer et trier les informations de position d'avion à inclure dans un ensemble réduit d'informations de position d'avion, le filtre d'échantillonnage étant éventuellement basé sur des critères temporels et de précision.

14. Procédé informatisé selon l'une quelconque des revendications 11 à 13, dans lequel le processeur délivre en outre en sortie (72) des informations de position d'avion extrapolées de sorte qu'elles puissent être superposées sur les données de mappage géographique électroniques si aucune information de position d'avion n'est reçue au niveau du processeur pour un avion donné dans une période de temps donnée.

15. Procédé informatisé selon l'une quelconque des revendications 12 à 14, lorsqu'elles dépendent de la revendication 20, dans lequel le processeur délivre en outre en sortie (74) des informations de position d'avion ACARS de sorte qu'elles puissent être superposées sur les données de mappage géographique électroniques à côté des informations de position d'avion lissées si les informations de position d'avion ACARS ne font pas partie des informations de position d'avion lissées.
